# EUROPÄISCHE PATENTANMELDUNG

(11) **EP 2 957 470 A1**
(43) Veröffentlichungstag der Anmeldung: **23.12.2015**
(21) Anmeldenummer: 15171112.4
(22) Anmeldetag: 09.06.2015
(51) Int. Cl.: B60S 9/04, B60T 3/00

(54) **STABILISIERUNGSEINRICHTUNG BEI TECHNISCHER HILFELEISTUNG FÜR ZU SICHERNDE OBJEKTE**

(30) Priorität: 13.06.2014 DE 102014108340
(71) Anmelder: Stablox GmbH, 89231 Neu-Ulm (DE)
(72) Erfinder: Kügele, Fabian, 89250 Senden (DE)
(74) Vertreter: Baur & Weber Patentanwälte

(57) **Zusammenfassung**

Es wird eine Stabilisierungseinrichtung bei technischer Hilfeleistung für zu sichernde Objekte, insbesondere für verunfallte Fahrzeuge, beschrieben umfassend eine erste Platte, die auf ihrer Oberseite eine Auflagefläche für das zu sichernde Objekt aufweist, und eine zweite Platte, die auf ihrer Unterseite eine Standfläche auf einem unterhalb des zu sichernden Objekts liegenden Untergrund aufweist, wobei die erste Platte und die zweite Platte gegenüber liegend angeordnet sind und mit einer Führungseinrichtung zum parallelen Versatz zueinander versehen sind, wobei zwischen der ersten Platte und der zweiten Platte eine Ausnehmung mit wenigstens einer Schrägfläche ausgebildet ist, die zur Aufnahme eines korrespondierenden Einschubelements ausgebildet ist, so dass durch Einschieben des Einschubelements mittels Kraftbeaufschlagung der parallele Versatz der ersten Platte zur zweiten Platte erfolgt.

## Beschreibung

Die Erfindung betrifft eine Stabilisierungseinrichtung bei technischer Hilfeleistung für zu sichernde Objekte, insbesondere für verunfallte Fahrzeuge.

Bei Verkehrsunfällen, beispielsweise von Personenkraftwagen, wird gelegentlich die Fahrzeugkarosserie so stark beschädigt, dass ein Bergen des oder der Passagiere des verunfallten Fahrzeugs durch Ersthelfer nicht ohne weiteres möglich ist. In diesen Fällen wird technische Hilfeleistung, beispielsweise durch die nächstgelegene Feuerwehr oder dem Technischen Hilfswerk (THW) angefordert, die mittels Rettungsgeräten wie Spreizern oder Scheren auch bei in Folge des Verkehrsunfalls nicht mehr zu öffnenden Fahrzeugtüren die Fahrzeugkarosserie öffnen, so dass eine Erstversorgung am Unfallort möglich ist.

Aufgrund der dabei entstehenden Kräfte durch den Einsatz von Rettungsgeräten ist es vor Beginn der Arbeiten nötig, das Kraftfahrzeug gegenüber dem Untergrund zu sichern. Hierbei ist zu beachten, dass ein auf seinen Rädern stehendes Kraftfahrzeug über die Federelemente durch das Rettungsgerät in Bewegung versetzt werden würde, was beispielsweise bei Halswirbelsäulenverletzungen des oder der Insassen zusätzliche Komplikationen hervorrufen könnte. Daher wird vor Beginn des Einsatzes des Rettungsmittels das Fahrzeug gegenüber dem Untergrund stabilisiert, indem speziell dafür bereitgestellte Sicherungssysteme unter den Fahrzeugboden gebracht werden.

Aus dem allgemeinen Stand der Technik sind mehrere derartiger Sicherungssysteme bekannt. So werden beispielsweise treppenstufenförmige Keile angeboten, die so weit unter das verunfallte Fahrzeug geschoben werden, dass der gerade noch passende Treppenabsatz unter dem Fahrzeugboden zu liegen kommt. In diesen Zwischenraum werden anschließend Keile oder Platten eingeschoben, um das Fahrzeug anzuheben bzw. zu stabilisieren. Ein Nachteil dieses Systems ist jedoch, dass der treppenförmige Keil, sofern er nicht vollständig unter das Fahrzeug geschoben werden kann, über den Fahrzeugrand hinaus ragt, so dass die technische Rettung behindert wird bzw. eine nicht unerhebliche Stolpergefahr für das Rettungspersonal darstellt. Darüber hinaus kann der treppenförmige Keil bei weichem Untergrund auch verrutschen.

Andere Systeme werden beispielsweise in Form mehrerer parallel angeordneter Leisten bereit gestellt, die zueinander verschiebbar sind, so dass der aus den Leisten gebildete Block in seiner Höhe anpassbar ist. Um nun eine Stabilisierung des verunfallten Fahrzeugs zu erreichen, muss dieses jedoch zuerst angehoben werden, um die ausgewählten Leisten unter das Fahrzeug schieben zu können. Während der technischen Rettung ist man heutzutage jedoch bestrebt, möglichst wenig Erschütterungen bzw. Lageänderungen an dem verunfallten Fahrzeug durchzuführen, so dass beispielsweise Wirbelsäulenverletzungen der Insassen nicht noch weiter verkompliziert oder verstärkt werden.

Ein anderes bekanntes System wird durch einen Keil gebildet, der auf seiner Schrägfläche feingliedrige Profilkanten aufweist, wobei eine Platte auf diese Schrägfläche aufsetzbar ist und durch Hochziehen entlang der Schrägfläche an der entsprechenden Profilkante verhängt, so dass die Platte nicht mehr zurück gleiten kann. Auch bei diesem System ist jedoch nachteilig, dass der Unterlegkeil weit über das Fahrzeug hinaus ragen kann, und wie oben beschrieben, die technische Rettung stört.

Ein anderes bekanntes System besteht aus einer Vielzahl von übereinander liegenden Platten, wobei jeweils zwei benachbart liegende Platten am rechten bzw. linken Rand mit einem Gelenk verbunden sind, so dass zwischen diese Platten jeweils ein Keil einschiebbar ist. Nachteilig bei diesem System ist jedoch, dass die Keile von der Seite her, d. h. in oder gegen die Fahrtrichtung zwischen die Platten geschoben werden müssen. Dadurch ist es nicht möglich, dieses System direkt unter der A- und der C-Säule eines Fahrzeugs einzusetzen, da dort die Fahrzeugräder ein Einschieben der Keile unmöglich machen. Darüber hinaus ist es auch nötig, dass unter dem verunfallten Fahrzeug gearbeitet werden muss, um die Keile einschieben zu können. Insbesondere auf weichen Untergründen bzw. bei schräg stehenden Fahrzeugen ist dies jedoch mit Gefahren für das Rettungspersonal verbunden.

Es besteht daher in der Technik ein Bedarf, ein System zur Stabilisierung von verunfallten Fahrzeugen zu schaffen, das die o. g. Nachteile überwindet.

Es ist daher Aufgabe der Erfindung, ein Stabilisierungselement zu schaffen, das nicht über das zu sichernde Objekt hinaus ragt und darüber hinaus eine Bedienung außerhalb des zu sichernden Objekts ermöglicht.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Stabilisierungseinrichtung bei technischer Hilfeleistung für zu sichernde Objekte, insbesondere für verunfallte Fahrzeuge, geschaffen umfassend eine erste Platte, die auf ihrer Oberseite eine Auflagefläche für das zu sichernde Objekt aufweist, und eine zweite Platte, die auf ihrer Unterseite eine Standfläche auf einem unterhalb des zu sichernden Objekts liegenden Untergrund aufweist, wobei die erste Platte und die zweite Platte gegenüber liegend angeordnet sind und mit einer Führungseinrichtung zum parallelen Versatz zueinander versehen sind, wobei zwischen der ersten Platte und der zweiten Platte eine Ausnehmung mit wenigstens einer Schrägfläche ausgebildet ist, die zur Aufnahme eines korrespondierenden Einschubelements ausgebildet ist, so dass durch Einschieben des Einschubelements mittels Kraftbeaufschlagung der parallele Versatz der ersten Platte zur zweiten Platte erfolgt.

Die vorgeschlagene Stabilisierungseinrichtung wird hauptsächlich zum Stabilisieren von verunfallten Fahrzeugen verwendet, wobei der Anwendungsbereich nicht auf Personenkraftfahrzeuge im Rahmen der leichten technischen Hilfeleistung beschränkt ist, sondern beispielsweise auch im Rahmen der schweren technischen Hilfeleistung bei Lastkraftwagen angewendet werden kann. Darüber hinaus ist es auch möglich, die erfindungsgemäße Stabilisierungseinrichtung nicht nur zum Sichern in einer vertikalen Richtung einzusetzen, sondern beispielsweise auch bei Bergungseinsätzen von eingeklemmten Personen, wobei dann die Stabilisierung in horizontaler oder beliebiger anderer Richtung erfolgen kann.

Aufgrund der Bereitstellung einer Ausnehmung ist es möglich, das beispielsweise keilförmige Einschubelement zwischen die erste Platte und die zweite Platte zu bringen, so dass der Abstand zwischen der ersten Platte und der zweiten Platte parallel veränderbar ist und die Platten zueinander versetzt werden. Die Ausnehmung und damit einhergehend das Einschubelement können beliebige geometrische Formen aufweisen, wobei lediglich sicher gestellt sein muss, dass die Schrägflächen an der Ausnehmung und dem Einschubelement übereinstimmen. Unter übereinstimmenden Schrägflächen ist dabei zu verstehen, dass diese auch nur lediglich abschnittsweise übereinstimmen können, da beispielsweise einzelne Einsenkungen oder Rillen bzw. Riefen die Funktion nicht grundsätzlich beeinträchtigen. Durch den parallelen Versatz der ersten Platte und der zweiten Platte wird eine zuverlässige Stabilisierung erreicht, wobei bei verunfallten Fahrzeugen beispielsweise die Einschubrichtung senkrecht zur Fahrtrichtung des Fahrzeugs gewählt werden kann. Demnach ist es möglich, das Einschubelement ohne unter das verunfallte Fahrzeug greifen zu müssen, in die Ausnehmung einzubringen, so dass eine Stabilisierung möglich ist. Die im Stand der Technik oftmals anzutreffenden Einschränkungen bei Arbeiten unterhalb der A- oder C-Säule entfallen somit.

Desweiteren kann je nach gewünschter Versatzhöhe zwischen der ersten Platte und der zweiten Platte unterschiedlich groß geformte keilförmige Einschubelemente bereit gestellt werden, die für den gewünschten Versatz sorgen. Demnach treten keine weit ausragenden Teile mehr auf, die das Rettungspersonal behindern könnten.

Dabei kann es auch vorgesehen sein, dass das Stabilisierungselement zuerst mit einem kürzeren Keil um eine erste Höhe angehoben wird und anschließend mit einem zweiten, länger geformten Keil von der ersten Höhe zu einer zweiten Höhe angehoben wird. Der erste Keil würde durch das Einschieben des zweiten Keils vom Bereich zwischen der ersten Platte und der zweiten Platte entlang der Einschubrichtung durchgeschoben werden, so dass er schließlich die Ausnehmung verläßt und die erste Platte und die zweite Platte vom zweiten Keil gehalten werden.

Gemäß einer Ausführungsform der Erfindung ist ein Rückstellmittel zwischen der ersten Platte und der zweiten Platte vorgesehen, das eine Rückstellkraft erzeugt, die so gewählt ist, dass während des Einschiebens des Einschubelements dieses zwischen der ersten Platte und der zweiten Platte gehalten ist. Demnach wird mittels des Rückstellmittels eine Rückstellkraft zwischen der ersten Platte und der zweiten Platte erzeugt, die das Einschubelement fixiert. Dies führt insbesondere dazu, dass die Stabilisierungseinrichtung beim Transport zu dem zu sichernden Objekt, beispielsweise unterhalb eines Kraftfahrzeugs, gesichert ist, so dass das Einschubelement nicht herausfallen kann. Dies ermöglicht auch das Arbeiten in geneigter Position des Stabilisierungselements bzw. vereinfacht die Handhabung insbesondere bei komplizierten Berge- und Rettungssituationen.

Gemäß einer weiteren Ausführungsform der Erfindung ist darüber hinaus eine dritte Platte vorgesehen, die zwischen der ersten und der zweiten Platte angeordnete ist, wobei jeweils zwischen der ersten Platte und der dritten Platte und/oder der dritten Platte und der zweiten Platte eine entsprechende Ausnehmung gebildet ist.

Zur Bereitstellung der stabilisierenden Funktion ist der Versatz der ersten Platte zur zweiten Platte ausreichend. Die vorteilhafte Weiterbildung sieht nun zwischen der ersten Platte und der zweiten Platte eine dritte Platte vor, wobei die dritte Platte jeweils zu der ersten bzw. zu der zweiten Platte eine Ausnehmung bilden kann. In diese Ausnehmungen können wiederum die Einschubelemente geführt werden, so dass insgesamt ein größerer Bereich von Höhendifferenzen einstellbar ist. Dabei kann es selbstverständlich auch vorgesehen sein, lediglich zwischen der dritten Platte und einer der beiden anderen Platten eine Ausnehmung vorzusehen.

Gemäß einer weiteren Ausführungsform der Erfindung ist jeweils in der ersten Platte und der zweiten Platte eine Schrägfläche ausgebildet.

Bevorzugt wird in der Konfiguration mit drei Platten jeweils eine Schrägfläche in der ersten Platte und in der zweiten Platte ausgebildet. Diese Schrägfläche kann über die Länge der jeweiligen Platte vollständig oder nahezu vollständig ausgebildet sein. Es ist jedoch auch möglich, beispielsweise eine Konfiguration zu wählen, bei der in der ersten bzw. in der zweiten Platte zur Mitte hin verlaufende Schrägflächen ausgebildet sind, so dass die Einschubvorrichtung von beiden Seiten des Stabilisierungselements eingeführt werden könnte. Im Hinblick auf eine kostengünstige Produktion ist jedoch die geschilderte Ausführungsform mit jeweils einer Schrägfläche bevorzugt.

Gemäß einer weiteren Ausführungsform der Erfindung ist die Führungseinrichtung mittels mehrerer Passbolzen gebildet, die vorzugsweise im Eckbereich der jeweiligen Platte angeordnet sind.

Um den parallelen Versatz zu erreichen, kann die Führungseinrichtung in Form von Passbolzen zwischen der ersten und der dritten Platte bzw. zwischen der zweiten und der dritten Platte bereitgestellt werden, wobei die Passbolzen in der ersten Platte und in der zweiten Platte fixiert sind. Andere Befestigungsmöglichkeiten der Passbolzen sind jedoch ebenfalls möglich. Die Passbolzen werden bevorzugt im Eckbereich der jeweiligen Platten angeordnet, wobei andere Konfigurationen nicht ausgeschlossen sein sollen. Unter Passbolzen ist hierbei generell die Führung zweier Platten relativ zueinander zu verstehen, so dass auch andere als beispielsweise zylinderförmige Bolzen zum Einsatz kommen können.

Gemäß einer weiteren Ausführungsform der Erfindung ist das Rückstellmittel durch Zugfedern gebildet, die zwischen den Platten angeordnet sind, oder bei der das Rückstellmittel durch Seilzüge gebildet ist, die zwischen den Platten laufen und mittels Federspannung die Rückstellkraft erzeugen.

Das Rückstellmittel kann auf vielerlei Arten gebildet werden. Am einfachsten ist die Bereitstellung von Zugfedern, die beispielsweise benachbart zu den soeben erwähnten Passbolzen angeordnet sein können. Es ist aber auch denkbar, beispielsweise einen oder mehrere Seilzüge vorzusehen, die mittels einer Feder so vorgespannt und an einer benachbarten Platte mit ihrem Endpunkt fixiert sind, dass die erwähnte Rückstellkraft erzeugt werden kann.

Gemäß einer weiteren Ausführungsform der Erfindung sind die Platten aus Holz, Kunststoff, Metall oder einer Kombination dieser Materialien, vorzugsweise mit einer rechteckförmigen Grundfläche, hergestellt.

Die genannten Materialien erlauben eine kostengünstige Produktion der Stabilisierungseinrichtung. Hierbei ist zu bedenken, dass für eine großflächige Verbreitung dieser Einrichtung, die im Sinne eines verbesserten Rettungsgeräts erstrebenswert wäre, häufig auch durch die aufwendbaren Mitteln der Feuerwehreinheiten begrenzt sein könnte. Es ist daher erforderlich, dass die erfindungsgemäße Lösung kostengünstig zu produzieren ist, um den Investitionsbedarf möglichst gering zu halten.

Gemäß einer weiteren Ausführungsform der Erfindung ist zwischen den Platten ein Sicherungsmittel angeordnet, vorzugsweise in Form eines Klettbands, das die Platten während des Transports zusammen hält.

Demnach ist es vorgesehen, dass die einzelnen Platten beim Transport der Stabilisierungseinrichtung gesichert sind, so dass das Rettungspersonal beim Anbringen der Stabilisierungseinrichtung keine Maßnahmen treffen muss, um ein Verrutschen der Platten zueinander zu verhindern. Dies ist insbesondere vorteilhaft, wenn die erfindungsgemäße Stabilisierungseinrichtung bei der Bergung eingeklemmter Personen verwendet wird, da hier oftmals die Stabilisierung in einer horizontalen Richtung erfolgen muss, beispielsweise falls Arbeiter hinter einer Wand, einem Container oder ähnlichem eingeklemmt sind. Die Sicherungseinrichtung läßt sich erst bei Einsatz am Unfallort lösen.

Gemäß einer weiteren Ausführungsform der Erfindung ist die Oberseite der ersten Platte profiliert, so dass zusätzliche Zwischenplatten ohne Verrutschen anbringbar sind.

Desweiteren kann es vorgesehen sein, dass die Oberseite der ersten Platte beispielsweise noppenförmige Vorsprünge aufweist, um ein oder mehrere Zwischenplatten, die zwischen die Stabilisierungseinrichtung und das zu sichernde Objekt eingebracht werden können, gegen Verrutschen zu sichern. Diese Platten sind bei Feuerwehrzügen oftmals bereits bei den nach dem Stand der Technik verwendeten Geräten vorhanden, so dass hier keinerlei weitere Investitionen nötig sind. Desweiteren kann es auch vorgesehen sein, dass das soeben erwähnte Sicherungsmittel auch die zusätzliche Zwischenplatte während des Transports sichert.

Gemäß einer weiteren Ausführungsform der Erfindung ist das Einschubelement manuell, hydraulisch, pneumatisch oder mittels eines Stellmotors einschiebbar.

In bevorzugter Ausführungsform wird das Einschubelement manuell bzw. unter Zuhilfenahme eines handbetätigten Werkzeugs in die Ausnehmung geführt. Andere Vorgehensweisen sind jedoch nicht ausgeschlossen.

Nachfolgend werden einige Ausführungsbeispiele anhand der Zeichnung näher erläutert. Es zeigen:
- Fig. 1: eine Seitenansicht einer erfindungsgemäßen Stabilisierungseinrichtung vor Einführen eines Einschubelements,
- Fig. 2: die Stabilisierungseinrichtung aus Fig. 1 in einer Schnittansicht,
- Fig. 3: die Stabilisierungseinrichtung aus Fig. 1 nach Einführen eines Einschubelements,
- Fig. 4: eine perspektivische Seitenansicht einer weiteren Ausführungsform einer erfindungsgemäßen Stabilisierungseinrichtung in einer Explosionsdarstellung, und
- Fig. 5: die Stabilisierungseinrichtung aus Fig. 4 im zusammengesetzten Zustand.

In den Figuren sind gleiche oder funktional gleich wirkende Bauteile mit den gleichen Bezugszeichen versehen.

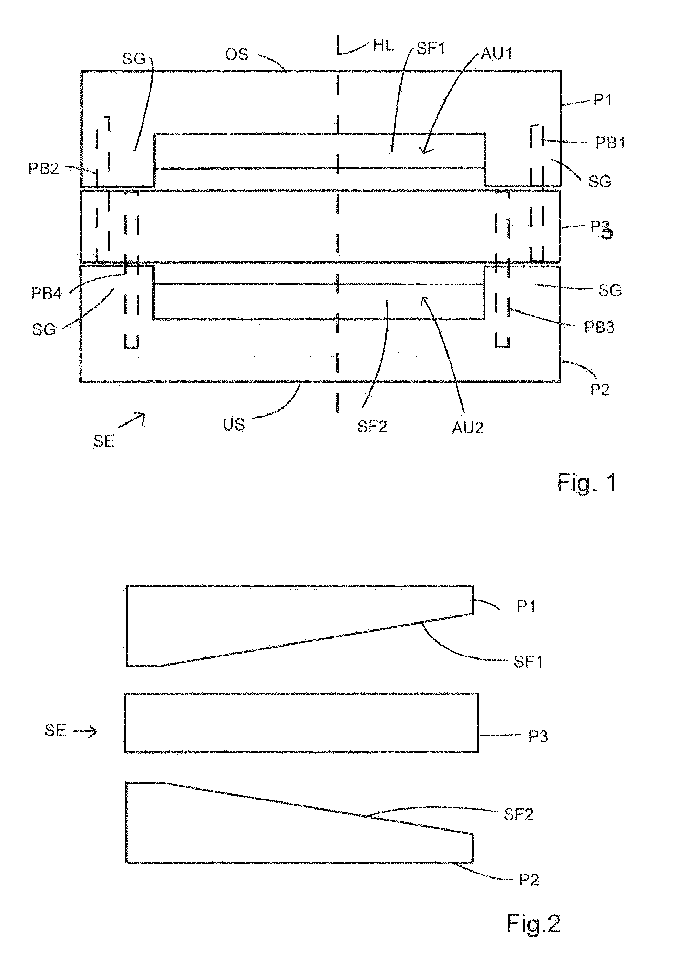

In Fig. 1 ist eine Ausführungsform eines erfindungsgemäßen Stabilisierungselements SE in einer Seitenansicht gezeigt. Die Seitenansicht in Fig. 1 entspricht dabei der Einschubrichtung eines nicht in Fig. 1 dargestellten Einschubelements. Das Stabilisierungselement SE weist eine erste Platte P1 auf, deren Oberseite OS in Richtung des zu sichernden Objekts, beispielsweise ein Kraftfahrzeug, weist. Unterhalb der ersten Platte P1 ist eine zweite Platte P2 angeordnet, deren Unterseite US auf einem Untergrund unterhalb des zu sichernden Objekts aufliegt. Zwischen der ersten Platte P1 und der zweiten Platte P2 ist eine dritte Platte P3 angeordnet.

Die erste Platte P1, die zweite Platte P2 und die dritte Platte P3 weisen jeweils eine rechteckförmige oder quadratische Grundfläche auf und werden mit gleichen oder nahezu gleichen Seitenlängen bereitgestellt.

In der ersten Platte P1 ist in Einschubrichtung, d. h. in einer Ebene senkrecht zur Zeichenebene der Fig. 1 eine Ausnehmung AU1 gebildet, die an der Seitenwand der ersten Platte P1 eine rechteckförmige Gestalt aufweisen kann. Ausgehend von der durch das Rechteck gebildeten Seitenfläche verläuft eine Schrägfläche SF1 vom Betrachter abgewandt entlang der Einschubrichtung. Somit wird eine keilförmige Ausnehmung AU1 in der ersten Platte P1 gebildet. Die zweite Platte P2 weist ebenfalls eine zweite Ausnehmung AU2 auf, die analog zur ersten Ausnehmung AU1 mit einer Schrägfläche SF2 gebildet sein kann.

Die Ausnehmungen AU1 und AU2 werden seitlich jeweils durch Stege SG begrenzt, die im Material der ersten Platte P1 bzw. der zweiten Platte P3 gebildet sind. Demnach lassen sich die erste Platte P1 und die zweite Platte P2 jeweils in einem einzigen Bearbeitungsschritt herstellen.

Zwischen der ersten Platte P1 und der dritten Platte P3 sowie zwischen der zweiten Platte P2 und der dritten Platte P3 ist eine Führungseinrichtung in Form mehrerer Passbolzen PB1, PB2, PB3 und PB4 angeordnet. Die Passbolzen PB1, PB2, PB3 und PB4 sind in der ersten Platte P1 bzw. in der zweiten Platte P2 gesichert, beispielsweise mittels einer Verschraubung (nicht in Fig. 1 gezeigt). Innerhalb der dritten Platte P3 können die Passbolzen PB1, PB2, PB3 und PB4 frei gleiten, so dass die erste Platte P1 und die zweite Platte P2 parallel zueinander versetzbar sind. Es ist selbstverständlich möglich, mehr als die gezeigten Passbolzen PB1, PB2, PB3 und PB4 anzubringen, insbesondere in allen Ecken der Stabilisierungseinrichtung SE. Dabei ist es insbesondere vorteilhaft, die Passbolzen PB1, PB2, PB3 und PB4 vollständig durch die dritte Platte P3 zu führen bzw. erst am gegenüberliegenden Rand der dritten Platte P3 enden zu lassen, um eine möglichst große Versatzhöhe der ersten Platte P1 bzw. der zweiten Platte P2 relativ zur dritten Platte P3 erreichen zu können.

Die Anordnung der Ausnehmungen AU1 und AU2 werden unter Bezugnahme auf Fig. 2 nochmals näher erläutert. Fig. 2 ist dabei eine Querschnittsansicht, die senkrecht zur Zeichenebene der Fig. 1 entlang der Hilfslinie HL geschnitten ist. Wie Fig. 2 zu entnehmen ist, weisen sowohl die erste Platte P1 als auch die zweite Platte P2 im Bereich der Ausnehmungen AU1 und AU2 jeweils eine Schrägfläche SF1 bzw. SF2 auf, die nahezu vollständig über der Plattenfläche ausgebildet ist.

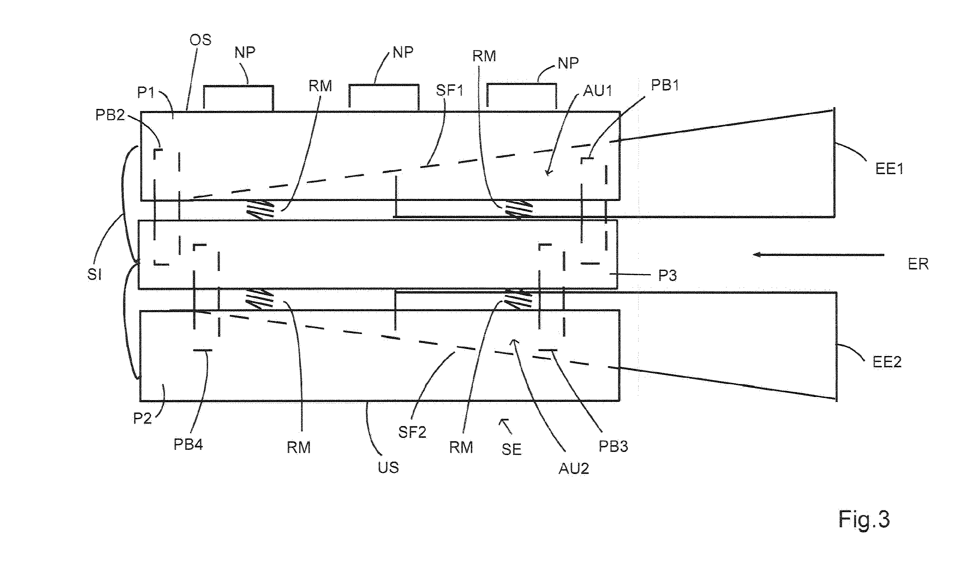

In Fig. 3 ist die Ausführungsform gemäß Fig. 1 in einer weiteren Seitenansicht gezeigt. Diese Seitenansicht ist dabei senkrecht zur Einschubrichtung des Einschubelements EE gezeichnet, wie in Fig. 3 mittels des Pfeils ER angedeutet ist. In den Bereich der Ausnehmungen AU1 und AU2 kann wie in Fig. 3 gezeigt jeweils ein Einschubelement EE1 und EE2 geführt werden, die für den parallelen Versatz der ersten Platte P1 bzw. der zweiten Platte P2 sorgen. Das Einschubelement EE1 ist in Fig. 3 als Keil ausgeführt, der eine Schrägfläche aufweist, die mit der Schrägfläche SF1 korrespondiert. Entsprechend weist das Einschubelement EE2 eine Schrägfläche auf, die mit der Schrägfläche SF2 korrespondiert. Insbesondere ist es vorgesehen, dass beide Schrägflächen SF1 und SF2 eine gleiche Geometrie aufweisen, so dass nur eine Form eines Einschubelements bereitgestellt werden muss.

Die Darstellung in Fig. 3 entspricht dabei einem Zustand, in dem die Einschubelemente EE1 und EE2 bereits in eine gewisse Tiefe eingeführt wurden. Demnach ist die erste Platte P1 bezüglich der dritten Platte P3 und die zweite Platte P2 bezüglich der dritten Platte P3 versetzt, wobei der Versatz parallel zueinander erfolgt. Zwischen der ersten Platte P1 und der dritten Platte P3 sowie zwischen der dritten Platte P3 und der zweiten Platte P2 ist ein Rückstellmittel RM in Form mehrerer Federn angebracht, die eine Rückstellkraft erzeugen, so dass die Einschubelemente EE1 bzw. EE2 während des Transports der Stabilisierungseinrichtung SE nicht mehr aus den Ausnehmungen AU1 bzw. AU2 heraus gleiten können.

Zusätzlich ist noch ein Sicherungsmittel SI angedeutet, das beispielsweise in Form eines Klettbands die einzelnen Elemente der Stabilisierungseinrichtung SE während des Transports zusammen hält. Auf der Oberseite OS der ersten Platte P1 können optional mehrere noppenförmige Vorsprünge NP angeordnet sein, die ohne Verrutschen eine Zwischenplatte aufnehmen können. Das in Fig. 3 gezeigte Beispiel einer Stabilisierungseinrichtung SE kann dabei eine Versatzhöhe aufweisen, bei der durch Einbringen der Einschubelemente EE1 bzw. EE2 eine Anhebung von 80 mm auf 150 mm erreicht werden kann. Sofern diese Versatzhöhe nicht ausreichend ist, um das zu sichernde Objekt zu stabilisieren, wird vorteilhafterweise auf die noppenförmige Vorsprünge NP eine Zwischenplatte angebracht.

Die Stabilisierungseinrichtung SE kann beispielsweise aus Holz, Kunststoff oder Metall bzw. aus einer Kombination dieser Materialien als rechteckiger oder quadratischer Stapel aus den Platten P1, P2 und P3 gefertigt sein. Dies ermöglicht die kostengünstige Produktion einer erfindungsgemäßen Stabilisierungseinrichtung SE.

Die erfindungsgemäße Stabilisierungseinrichtung SE wird hauptsächlich zum Stabilisieren von verunfallten Fahrzeugen benutzt. Dazu legt man die erfindungsgemäße Stabilisierungseinrichtung SE unter die A-, B-, und/oder C-Säule des von verunfallten Fahrzeugs und schätzt die ungefähr benötigte Versatzhöhe zwischen erster Platte P1 und zweiter Platte P2 ab. Diese wird gegebenenfalls durch die zusätzlichen Platten erweitert oder reduziert. Dann schiebt man die Stabilisierungseinrichtung SE unter das verunfallte Fahrzeug und durch das Einschieben der Einschubeinrichtung EE in Form eines Keiles kann die Stabilisierungseinrichtung SE von z.B. 80 mm auf 150 mm erhöht werden wodurch ein durch Handkraft ausreichend erzeugter Hub entsteht, welcher das Fahrzeug aus den Federn der Stoßdämpfer hebt. Dabei muss der Anwender nicht unter das Fahrzeug greifen und hat nach der Stabilisierung des Fahrzeuges kein nach außen stehendes Hindernis.

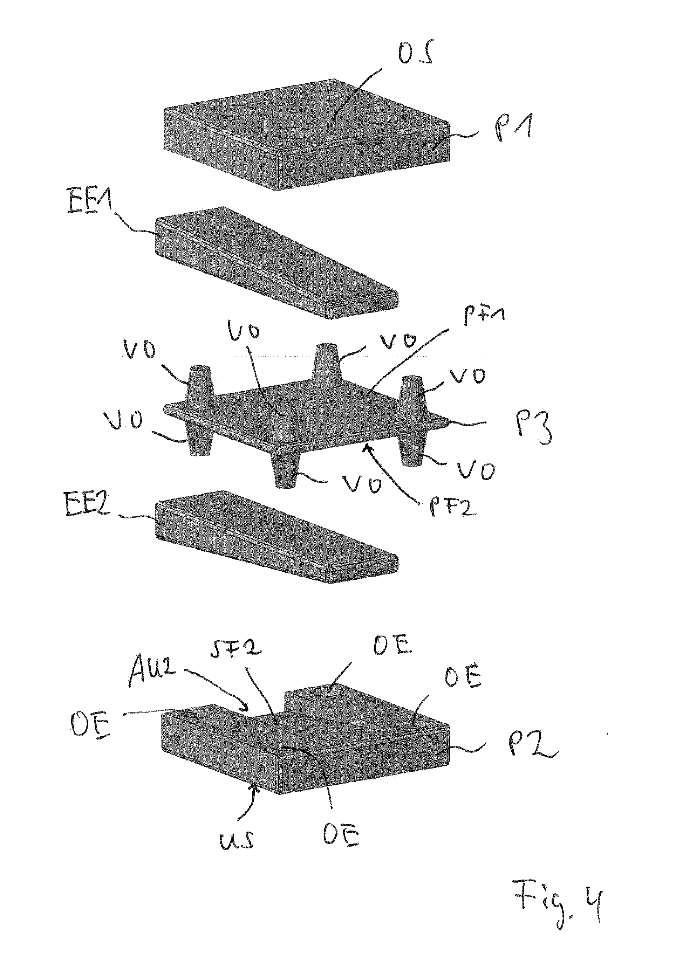

In Fig. 4 ist eine weitere Ausführungsform einer Stabilisierungseinrichtung SE gezeigt, die in perspektivischer Seitenansicht in Form einer Explosionsdarstellung schematisch gezeigt ist, um das Zusammenspiel der einzelnen Elemente besser erkennen zu können. Die Stabilisierungseinrichtung SE gemäß Fig. 3 besteht wiederum aus der ersten Platte P1 und der zweiten Platte P2, die jeweils mit den entsprechenden Schrägflächen SF1 und SF2 innerhalb der Ausnehmungen AU1 und AU2 versehen sind. Zwischen der ersten Platte P1 und der zweiten Platte P2 ist eine dritte Platte P3 angeordnet, die auf ihren Hauptflächen von einer ersten Plattenfläche PF1 und einer zweiten Plattenfläche PF2 gebildet wird. Die erste Plattenfläche PF1 und die zweite Plattenfläche PF2 sind dabei im Wesentlichen parallel zueinander ausgerichtet.

Die erste Plattenfläche PF1 und die zweite Plattenfläche PF2 werden im zusammengesetzten Zustand von dem nicht abgeschrägten Teil des Einschubelements EE1 bzw. EE2 berührt. Die dritte Platte P3 weist darüber hinaus bevorzugt im Bereich der Ecken kegelförmige Vorsprünge VO auf, die sowohl in Richtung der ersten Platte als auch in Richtung der zweiten Platte angeordnet sind. Die kegelförmigen Vorsprünge VO greifen in entsprechende Öffnungen OE, die auf der Oberseite der zweiten Platte P2 bzw. der Unterseite der ersten Platte P1 angeordnet sind. Die Vorsprünge VO wirken dabei zusammen mit den Öffnungen OE wie die im Zusammenhang mit Fig. 1 bis 3 beschriebenen Passbolzen PB1, ..., PB4 der Führungseinrichtung.

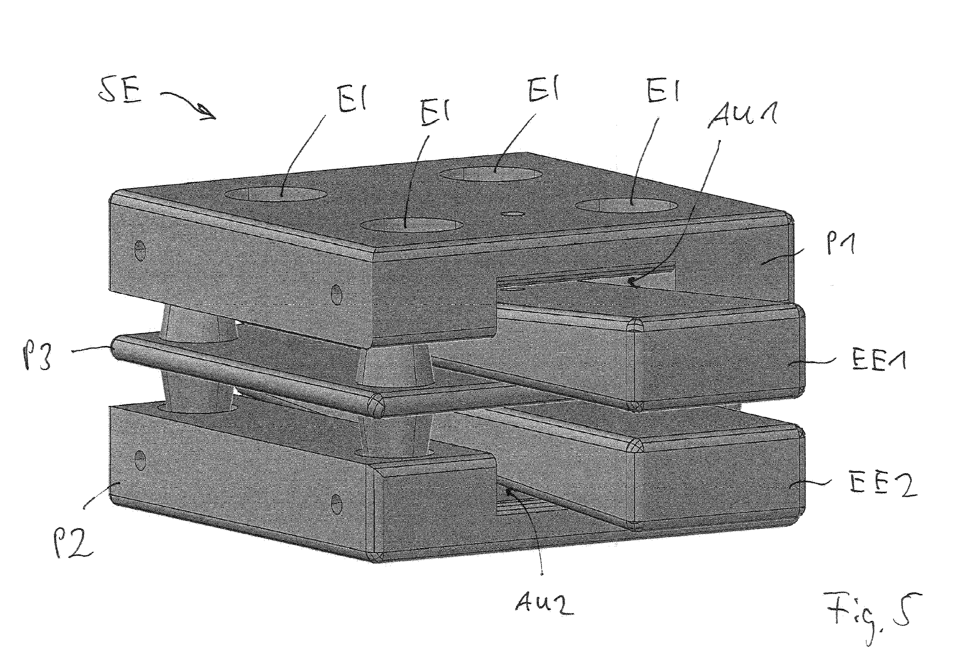

Die Stabilisierungseinrichtung SE gemäß Fig. 4 ist in Fig. 5 nochmals im zusammen gebauten Zustand und von der gegenüber liegenden Seite her gezeigt. Man erkennt, dass das erste Einschubelement EE1 bzw. das zweite Einschubelement EE2 in die entsprechenden Ausnehmungen AU1 bzw. AU2 eingeführt werden können, wobei durch Kraftbeaufschlagung ein paralleler Versatz der ersten Platte P1 zur dritten Platte P3 bzw. der zweiten Platte P2 zur dritten Platte P3 erreicht wird.

Die erste Platte P1 wird dabei über die Kombination aus Vorsprüngen VO und Öffnungen OE relativ zur dritten Platte P3 ausgerichtet. Entsprechendes gilt für die zweite Platte P2, die ebenfalls über die Vorsprünge VO bzw. die Öffnungen OE zur dritten Platte P3 ausgerichtet ist. Auf der Oberseite OS bzw. der Unterseite US der ersten Platte P1 bzw. der zweiten Platte P2 können entsprechende Einsenkungen El gebildet sein, die beispielsweise eine Zwischenplatte oder dergleichen aufnehmen können. Hier ist es ebenso möglich, beispielsweise noppenförmige Vorsprünge anzubringen, wie im Zusammenhang mit Fig. 3 erläutert ist.

Das Ausführungsbeispiel gemäß Fig. 4 und Fig. 5 eignet sich insbesondere zum Aufbau einer kompakten Stabilisierungseinrichtung SE, die über die Einsenkungen El bzw. Noppen NP mit einer Vielzahl anderer Elemente kombiniert werden kann, die beispielsweise in Form von Zwischenplatten, Abstandshaltern oder dergleichen gebildet werden. Durch ein Einführen der Einschubeinrichtung EE1 bzw. EE2 in verdrehter Form kann auch ein nicht paralleler Versatz erreicht werden.

Die erfindungsgemäße Vorgehensweise ist insbesondere bei Stabilisierungseinrichtungen für technische Hilfeleistung von Vorteil, da je nach Situation am Unfallort ganz unterschiedliche Maßnahmen getroffen werden müssen. So kann beispielsweise die zweite Platte P2 großflächig von einer Unterbauplatte gestützt werden, was insbesondere die Verwendung der Stabilisierungseinrichtung SE auf losem oder durchnässtem Untergrund ermöglicht. Auch können schräg liegende zu sichernde Objekte über keilförmige Elemente mit der Stabilisierungseinrichtung SE in Verbindung gebracht werden. Bei Verwendung entsprechend steifer Materialien ist auch die Stabilisierung von schweren Fahrzeugen möglich, wie beispielsweise Lastkraftwagen oder Omnibusse.

Die erfindungsgemäße Stabilisierungseinrichtung SE erweist sich im Alltagsbetrieb bei technischer Hilfeleistung als flexibel anwendbar, wobei auch die Sicherheit des Bedienpersonals gewährleistet ist, da die Einschubeinrichtungen EE1 bzw. EE2 bedient werden können, ohne unter das verunfallte Fahrzeug greifen zu müssen. Auch ist keine Ausgestaltung vorgesehen, bei der weit ausladende Elemente das Rettungspersonal behindern würden.

Des Weiteren kann man die Stabilisierungseinrichtung SE zum Sichern beim Anheben von Lasten wie z.B. einen Abrollcontainer verwenden. Durch die Schrägfläche SF und den parallelen Versatz kann man die Einschubeinrichtung EE in Form eines Keiles hindurch schieben und dadurch kontinuierlich den anzuhebenden Gegenstand sichern. Weiterhin kann man nicht nur in vertikaler Richtung ein Objekt stabilisieren und anheben sondern auch in waagerechter Richtung eine Kraft aufbauen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Stabilisierungseinrichtung bei technischer Hilfeleistung für zu sichernde Objekte, insbesondere für verunfallte Fahrzeuge, umfassend eine erste Platte, die auf ihrer Oberseite eine Auflagefläche für das zu sichernde Objekt aufweist, und eine zweite Platte, die auf ihrer Unterseite eine Standfläche auf einem unterhalb des zu sichernden Objekts liegenden Untergrund aufweist, wobei die erste Platte und die zweite Platte gegenüber liegend angeordnet sind und mit einer Führungseinrichtung zum parallelen Versatz zueinander versehen sind, wobei zwischen der ersten Platte und der zweiten Platte eine Ausnehmung mit wenigstens einer Schrägfläche ausgebildet ist, die zur Aufnahme eines korrespondierenden Einschubelements ausgebildet ist, so dass durch Einschieben des Einschubelements mittels Kraftbeaufschlagung der parallele Versatz der ersten Platte zur zweiten Platte erfolgt.

2. Stabilisierungseinrichtung nach Anspruch 1, bei der ein Rückstellmittel zwischen der ersten Platte und der zweiten Platte vorgesehen ist, das eine Rückstellkraft erzeugt, die so gewählt ist, dass während des Einschiebens des Einschubelements dieses zwischen der ersten Platte und der zweiten Platte gehalten ist.

3. Stabilisierungseinrichtung nach Anspruch 1 oder 2, bei der darüber hinaus eine dritte Platte vorgesehen ist, die zwischen der ersten und der zweiten Platte angeordnete ist, wobei jeweils zwischen der ersten und der dritten Platte und/oder der dritten und der zweiten Platte eine entsprechende Ausnehmung gebildet ist.

4. Stabilisierungseinrichtung nach einem der Ansprüche 1 bis 3, bei der jeweils in der ersten Platte und der zweiten Platte eine Schrägfläche ausgebildet ist.

5. Stabilisierungseinrichtung nach einem der Ansprüche 1 bis 4, bei der die Führungseinrichtung mittels mehrerer Passbolzen gebildet ist, die vorzugsweise im Eckbereich der jeweiligen Platte angeordnet sind.

6. Stabilisierungseinrichtung nach einem der Ansprüche 2 bis 5, bei der das Rückstellmittel durch Zugfedern gebildet ist, die zwischen den Platten angeordnet sind, oder bei der das Rückstellmittel durch Seilzüge gebildet ist, die zwischen den Platten laufen und mittels Federspannung die Rückstellkraft erzeugen.

7. Stabilisierungseinrichtung nach einem der Ansprüche 1 bis 6, bei der die Platten aus Holz, Kunststoff, Metall oder einer Kombination dieser Materialien, vorzugsweise mit einer rechteckförmigen Grundfläche, hergestellt sind.

8. Stabilisierungseinrichtung nach einem der Ansprüche 1 bis 7, bei der zwischen den Platten ein Sicherungsmittel angeordnet ist, vorzugsweise in Form eines Klettbands, das die Platten während des Transports zusammen hält.

9. Stabilisierungseinrichtung nach einem der Ansprüche 1 bis 8, bei der die Oberseite der ersten Platte profiliert ist, so dass zusätzliche Zwischenplatten ohne Verrutschen anbringbar sind.

10. Stabilisierungseinrichtung nach einem der Ansprüche 1 bis 9, bei der das Einschubelement manuell, hydraulisch, pneumatisch oder mittels eines Stellmotors einschiebbar ist.
